(19) Europäisches Patentamt
European Patent Office
Office européen des brevets

(11) **EP 1 283 643 B1**

(12) **FASCICULE DE BREVET EUROPEEN**

(45) Date de publication et mention
de la délivrance du brevet:
**11.11.2009 Bulletin 2009/46**

(51) Int Cl.:
***H04W 16/18*** (2009.01)

(21) Numéro de dépôt: **02291975.7**

(22) Date de dépôt: **06.08.2002**

(54) **Procédé d'estimation prévisionnelle de la couverture radio d'une cellule**

Verfahren zur Prädiktionsbestimmung der Funkzellenbedeckung

Method for predictive estimation of radio cell coverage

(84) Etats contractants désignés:
**AT BE BG CH CY CZ DE DK EE ES FI FR GB GR IE IT LI LU MC NL PT SE SK TR**

(30) Priorité: **10.08.2001 FR 0110718**

(43) Date de publication de la demande:
**12.02.2003 Bulletin 2003/07**

(73) Titulaire: **Société Française du Radiotéléphone-SFR**
**75008 Paris (FR)**

(72) Inventeur: **Fattouch, Imad**
**75013 Paris (FR)**

(74) Mandataire: **Debay, Yves**
**Cabinet Debay**
**126 Elysée 2**
**78170 La Celle Saint Cloud (FR)**

(56) Documents cités:
**WO-A-01/06349      WO-A-97/44977**

- **KURNER T ET AL: "CONCEPTS AND RESULTS FOR 3D DIGITAL TERRAIN-BASED WAVE PROPAGATION MODELS: AN OVERVIEW" IEEE JOURNAL ON SELECTED AREAS IN COMMUNICATIONS, IEEE INC. NEW YORK, US, vol. 11, no. 7, 1 septembre 1993 (1993-09-01), pages 1002-1012, XP000400010 ISSN: 0733-8716**
- **DOTTLING M ET AL: "Modeling of the DECT outdoor radio channel" VEHICULAR TECHNOLOGY CONFERENCE, 1997, IEEE 47TH PHOENIX, AZ, USA 4-7 MAY 1997, NEW YORK, NY, USA,IEEE, US, 4 mai 1997 (1997-05-04), pages 1947-1951, XP010229126 ISBN: 0-7803-3659-3**
- **AGUADO F ET AL: "Indoor and outdoor channel simulator based on ray tracing" VEHICULAR TECHNOLOGY CONFERENCE, 1997, IEEE 47TH PHOENIX, AZ, USA 4-7 MAY 1997, NEW YORK, NY, USA,IEEE, US, 4 mai 1997 (1997-05-04), pages 2065-2069, XP010229161 ISBN: 0-7803-3659-3**
- **TAN S Y ET AL: "Improved three-dimensional ray tracing technique for microcellular propagation models" ELECTRONICS LETTERS, IEE STEVENAGE, GB, vol. 31, no. 17, 17 août 1995 (1995-08-17), pages 1503-1505, XP006003247 ISSN: 0013-5194**

## Description

La présente invention concerne la phase de définition des réseaux de téléphonie cellulaire à implanter sur un territoire et en particulier un procédé d'estimation prévisionnelle de couverture radio du territoire, en vue de déterminer des paramètres de fonctionnement et des positions optimales des stations de base ou répéteurs du réseau, c'est-à-dire les limites des cellules radio correspondantes.

On rappellera qu'un réseau radiotéléphonique cellulaire est constitué d'une pluralité de stations terrestres de base qui sont interconnectées à travers le réseau téléphonique filaire et auxquelles les terminaux mobiles peuvent accéder lorsqu'ils se trouvent dans la cellule radio de la station.

La propagation radio dans une cellule doit satisfaire aux deux exigences essentielles que sont l'émission d'une puissance non excessive par la station de base et la réception par les terminaux de signaux radio de puissance suffisante.

En effet, la portée de chaque station de base doit, tout d'abord, être suffisante pour que la cellule considérée déborde sur les voisines, afin d'éviter tout risque de coupure de communication lorsqu'un terminal mobile change de cellule. Cela nécessite d'augmenter la puissance d'émission des stations au-delà du strict nécessaire.

Ensuite, comme les liaisons radio ont un trajet sensiblement linéaire au niveau du sol, il faut couvrir les zones d'ombre radio de la station, dues aux reliefs naturels ou aux immeubles. Une zone d'ombre est une zone dans laquelle l'atténuation de propagation radio, entre un terminal mobile qui s'y trouve et la station, dépasse la limite de la spécification de sensibilité des circuits radio, si bien que le niveau de réception est insuffisant pour détecter correctement les paquets de bits émis, représentant la parole ou des données à échanger. Or, il est exclu d'augmenter les niveaux d'émission.

En effet, côté station de base, toute augmentation accroîtrait la taille de la cellule, provoquant des interférences excessives entre cellules voisines. Côté terminaux mobiles, leur puissance maximale est limitée par des impératifs de sécurité des personnes et d'autonomie de leur batterie.

Il faut aussi éviter de multiplier inutilement le nombre de stations de base ou répéteurs pour les micro-cellules que représentent les zones d'ombre, afin de limiter les coûts et les interférences.

De façon classique, pour une cellule, on effectue un calcul prévisionnel des atténuations en une pluralité de points de la cellule, en utilisant une base de données vectorielle fournie par l'Institut Géographique National (IGN), entre autres, et représentant la carte de la zone géographique considérée avec les bâtiments et autres reliefs du sursol qu'elle comporte. Différents mots de code définissent le type de sursol, tel que forêt, eau, pavillons, spécifiés en coordonnées Lambert et en hauteur au dessus de l'altitude locale du sol par rapport à la mer.

Pour estimer l'atténuation prévisionnelle en tout point de la cellule, on effectue une simulation de propagation de signaux radioélectriques. On modélise la propagation en lançant fictivement, par calcul dans un calculateur d'une chaîne de production de prévisions de couverture radio, un rayon électromagnétique depuis la station de base, dans une direction déterminée, et on calcule ses conditions de propagation dans l'angle solide élémentaire qu'il occupe. Hormis la propagation en espace libre lorsque la station est en vue directe d'un terminal radio fictif, propagation d'atténuation linéaire connue, la trajectoire du rayon rencontre des obstacles qui l'atténuent ou la dévient de façon supplémentaire, en particulier dans les microcellules dont les stations sont souvent à une altitude inférieure à celle des toits des immeubles.

Ainsi, dans une rue, le rayon peut être dévié par réflexion ou réfraction. L'ouverture angulaire de son angle solide peut même s'en trouver accrue.

On répète ces calculs pour une pluralité d'angles solides élémentaires répartis dans un angle solide global de visée de toute la cellule, tel qu'une couronne globalement horizontale, afin d'ainsi échantillonner les diverses conditions de propagation de l'espace de la cellule, voir par exemple WO-A-97/44977.

En chaque point de la trajectoire de chaque rayon, le calculateur consulte la base de données vectorielle pour déterminer s'il comporte un obstacle. Les calculs vectoriels correspondants nécessitent une puissance de calcul considérable et s'étendent sur une journée de travail, en pratique ils doivent être lancés le soir, lorsqu'on utilise des ordinateurs classiques.

La présente invention vise à réduire la puissance de calcul nécessaire au calcul de la couverture radio de telles cellules, que ce soient des cellules de grande taille, ou macrocellules, ou des microcellules.

A cet effet, l'invention concerne un procédé d'estimation prévisionnelle de la couverture radio d'une cellule, d'un réseau de radiotéléphonie cellulaire, par une station radio de gestion de trafic de la cellule, au moyen d'une base de données de carte en relief spécifiant des positions et natures de reliefs de la cellule, procédé dans lequel, un système de calcul dans une phase d'exploitation,

- lance fictivement dans la cellule un rayon d'échantillonnage représentatif des conditions de propagation radioélectrique, selon un tronçon initial de trajectoire depuis une position d'origine et selon une direction et des conditions de propagation déterminées,
- par lecture de la base de données, le système de calcul compare le tronçon de trajectoire aux données de carte en relief pour identifier la position et la nature de tout point courant d'impact du tronçon de trajectoire avec un relief,

- d'après la nature spécifiée dans la base de données du relief considéré, le système de calcul détermine de nouvelles conditions de propagation sur un tronçon aval de trajectoire au-delà du point d'impact,
- le système de calcul réitère, le cas échéant, les deux étapes précédentes un nombre déterminé de fois pour d'autres impacts de tronçons aval de trajectoire,
- d'après les conditions de propagation sur la totalité de la trajectoire, le système de calcul détermine une atténuation cumulée pour tout point sélectionné de celle-ci, et
- le système de calcul répète toutes les étapes ci-dessus une pluralité de fois pour une pluralité de directions initiales afin d'échantillonner toute la cellule et ainsi déterminer une carte d'atténuations des points sélectionnés, procédé caractérisé par le fait que, dans une phase initiale,
- le système élabore la base de données sous la forme d'une matrice de données, à accès direct, de spécification locale et autonome des positions et natures des reliefs respectifs d'une pluralité de mailles prédéterminées d'un maillage correspondant de la carte, et,
- le système mémorise des données d'orientation géographique des reliefs dans la base de données matricielle dans la phase d'exploitation, le système de calcul
- compare la position du point courant au maillage pour identifier une maille d'impact,
- calcule les conditions de propagation après impact à partir des données de spécification locale et autonome de relief de la maille d'impact, et
- calcule une direction d'un rayon réfléchi de tronçon aval à partir des données d'orientation.

Les données de propagation ayant ainsi été fragmentées en une pluralité de données autonomes, et donc de volume réduit, il est alors facile d'y accéder rapidement pour les lire sous une forme exploitable.

Ainsi, le calcul des conditions de propagation en aval du point d'impact s'effectue à partir uniquement de données locales et de volume limité, à accès direct et non pas séquentiel comme dans le cas d'une base vectorielle, données qui définissent, pour le point d'impact, les conditions d'anisotropie radioélectrique déterminant, par atténuation, réflexion ou diffraction avec éventuellement diffusion, une éventuelle déviation angulaire et une nouvelle atténuation de propagation.

En l'absence de relief formant obstacle, les conditions de propagation en espace libre sont parfaitement connues. En particulier dans ce cas, une lecture des données d'une maille traversée montre immédiatement qu'il n'y a pas d'obstacle et on passe donc à la maille suivante, sans nécessiter les calculs très lourds, de l'art antérieur, de reconstitution vectorielle des données locales à partir d'une base de données globale

On notera que le terme relief ici considéré désigne globalement tout obstacle à la propagation, y compris le sol, même horizontal, qui est susceptible d'absorber ou de réfléchir au moins partiellement les rayons.

Avantageusement, le système mémorise, dans la phase initiale, des données d'orientation géographique des reliefs dans la base de données matricielle et, en exploitation, calcule une direction d'un rayon réfléchi de tronçon aval à partir des données d'orientation.

De préférence, dans ce cas, la mémorisation se limite à des données d'azimut et, en exploitation, la direction du rayon réfléchi de tronçon aval est calculée en considérant que les reliefs de réflexion sont verticaux.

Les calculs sont ainsi limités.

En particulier, il est préférable d'intégrer, dans la base de données matricielle, des données spécifiant une nature de sursol et, en exploitation, le système calcule les conditions de propagation sur le tronçon aval d'après ladite nature de sursol.

La précision des calculs de propagation est ainsi meilleure.

Pour tenir compte de détails des reliefs, dans la phase initiale, on peut intégrer des données relatives à des arêtes des reliefs dans la base de données matricielle et, en exploitation, le système de calcul calcule une direction de tronçon aval de rayon réfracté à partir desdites données d'arêtes.

De préférence encore, dans la phase initiale, des données d'atténuation des reliefs sont mémorisées dans la base de données matricielle et, en exploitation, le système calcule une atténuation de propagation sur le tronçon aval à partir desdites données d'atténuation.

En pareil cas, les données d'atténuation peuvent concerner la réflexion sur les reliefs et elles sont utilisées pour calculer l'atténuation sur le tronçon aval, et/ou les données d'atténuation concernent la propagation à travers les reliefs et elles sont utilisées pour calculer l'atténuation des rayons qui s'y propagent.

Avantageusement, les données d'atténuation de propagation à travers les reliefs comportent en outre des données de transition entre milieux de propagation, spécifiant des atténuations de pénétration dans les reliefs, qui sont utilisées pour déterminer une atténuation locale de pénétration.

Pour une modélisation de qualité accrue des conditions de propagation, et disposant d'un algorithme de calcul de dispersion angulaire du rayon après impact, le système calcule une pluralité de directions de tronçons aval, avec des atténuations spécifiques, formant un angle solide de diffusion du rayon au-delà de l'impact.

On peut en outre prévoir de compter les impacts successifs sur la trajectoire et, en cas de deuxième impact, le système considère, pour calculer lesdites conditions de propagation au-delà, que le rayon a été polarisé lors du premier impact.

Afin de limiter les calculs requis, le système compte les impacts successifs sur la trajectoire et compare le total à une valeur de seuil haut pour cesser d'exécuter les étapes du procédé lorsque le seuil est atteint, ou bien, à chaque impact, le système détermine l'atténuation de propagation cumulée et la compare à une valeur de seuil d'atténuation maximale pour cesser d'exécuter les étapes du procédé lorsque le seuil est atteint.

Pour exploiter au mieux les résultats, la carte des atténuations est mémorisée en trois dimensions.

On peut ainsi estimer un niveau de qualité prévisionnel des liaisons selon les étages des immeubles.

En particulier, pour élaborer la base de données, le système représente la carte par un faisceau de chaînes de pixels à extension verticale et découpe les chaînes de pixels pour constituer des volumes élémentaires empilés de mailles volumiques ayant chacun des données particulières.

De préférence, le système prend, comme position d'origine, une position prévue pour la station, mais, toutefois, peut prévoir de prendre, comme position d'origine, une position quelconque dans la cellule et la direction de lancement du rayon est choisie, d'après les positions et natures des reliefs proches, pour que le rayon passe à proximité de la station.

Ayant calculé, selon le procédé de l'invention, les conditions de propagation dans une microcellule en contact avec une cellule, donc plus grande et encore appelée macrocellule, le système peut alors calculer des conditions de propagation dans la cellule et effectue ensuite un calcul de lissage des résultats des deux calculs relatifs à une zone de frontière entre cellule et microcellule.

Le procédé permet ainsi de mieux intégrer fonctionnellement les deux types de cellules.

L'invention sera mieux comprise à l'aide de la description suivante d'un mode préféré de mise en oeuvre de l'invention, en référence au dessin annexé, sur lequel

- la figure 1 représente une carte géographique en relief formant une base de données, sur laquelle a été reportée la position d'une cellule d'un réseau de radiotéléphonie cellulaire en cours de définition,
- la figure 2 représente une courbe d'atténuation radio dans la cellule, sur une trajectoire comportant des obstacles et dont la station de base constitue l'une des extrémités,
- la figure 3 est une vue en plan du contour d'un immeuble sur une portion de la carte,
- la figure 4 est homologue de la figure 3 et illustre une réflexion et une réfraction sur un immeuble, et
- la figure 5 est une vue en coupe verticale illustrant la propagation entre des immeubles d'une macrocellule.

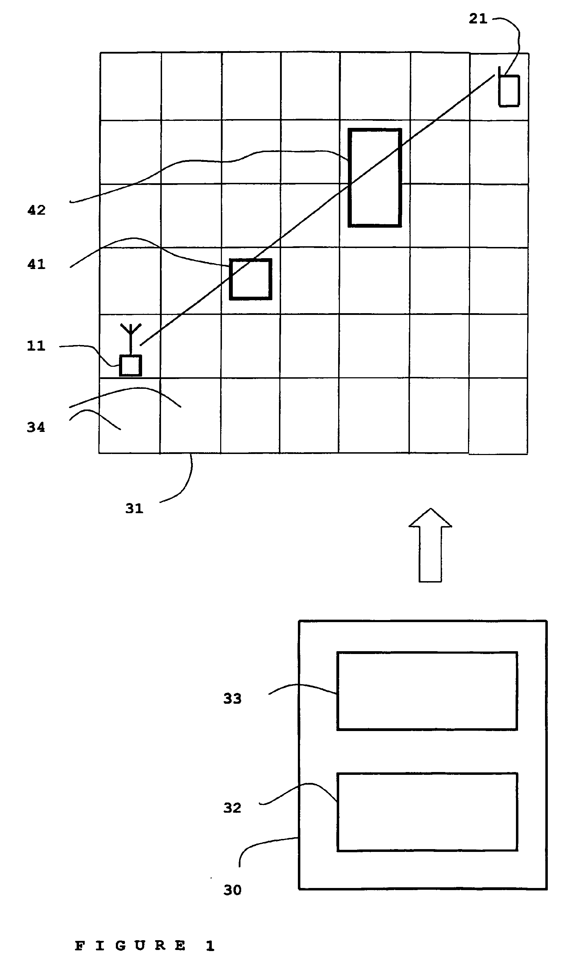

La figure 1 représente la position d'une cellule 1, d'un réseau de radiotéléphonie cellulaire prévu pour des terminaux comme celui référencé 21, reportée sur une portion de carte géographique 31 comportant aussi la position prévue d'une station radio de base 11 de gestion de la cellule 1. La carte 31 sert à déterminer des contours prévisionnels d'une pluralité de cellules constituant le réseau radio à implanter, en ajustant leur nombre, tailles et positions afin d'optimiser le volume de matériel tout en assurant la couverture radio voulue avec une qualité de service spécifiée.

La référence 31 désigne en fait ici la présentation des éléments du terrain, sol et sursol, de la zone considérée. Les données géographiques correspondantes permettant d'engendrer cette présentation sont stockées dans une base de données de relief 32, 33 d'un calculateur 30. Cette base de données comporte un bloc mémoire 32 spécifiant la forme et le relief du terrain, sol et sursol, associé à un bloc mémoire 33 de morphologie du sol et sursol spécifiant les natures ou caractéristiques de propagation radio des diverses occupations du sol, dans une plage de fréquences déterminée correspondant aux fréquences utilisées par les stations de base, ces données de morphologie du bloc mémoire 33 présentent les divers points du terrain considéré avec les reliefs ou formes du bloc géographique 32. On notera que le terme "relief" doit être pris dans une acception large pour désigner tout obstacle susceptible d'être atteint par un rayon, direct ou préalablement dévié, de la station 11. Il s'agit donc globalement du sol et du sursol. Outre les bâtiments, collines et équivalents, il peut donc aussi s'agir de flancs de vallées ou encore de plaines ou plans d'eau.

Comme expliqué plus loin, les données du bloc 33 permettent de déterminer, directement ou par une table de correspondance entre la nature et des données de caractéristiques de propagation radio, la perturbation apportée à un rayon radio incident, afin de déterminer la direction et l'atténuation ou amplitude d'un rayon aval correspondant. La carte 31 en elle-même n'a donc ici qu'un but didactique, puisque les données la définissant sont contenues dans les blocs 32, 33, qu'un calculateur exploite.

En variante, la station de base 11 pourrait être remplacée par une station de même fonction, mais de portée réduite, pour définir une microcellule. Comme indiqué au début, les microcellules sont implantées dans les zones de forts reliefs ou en ville, pour couvrir les zones d'ombre radio des cellules classiques.

On suppose ici que la trajectoire d'un rayon radio, ou faisceau étroit, reliant la station 11 au mobile 21 dans la cellule 1, rencontre des obstacles 41 et 42, respectivement un bâtiment et les arbres d'une forêt. Pour la simplicité de l'exposé, on suppose ici que les obstacles 41, 42 de la figure 1 ne dévient pas la trajectoire, qui reste donc rectiligne, sans réflexion ou réfraction par ceux-ci.

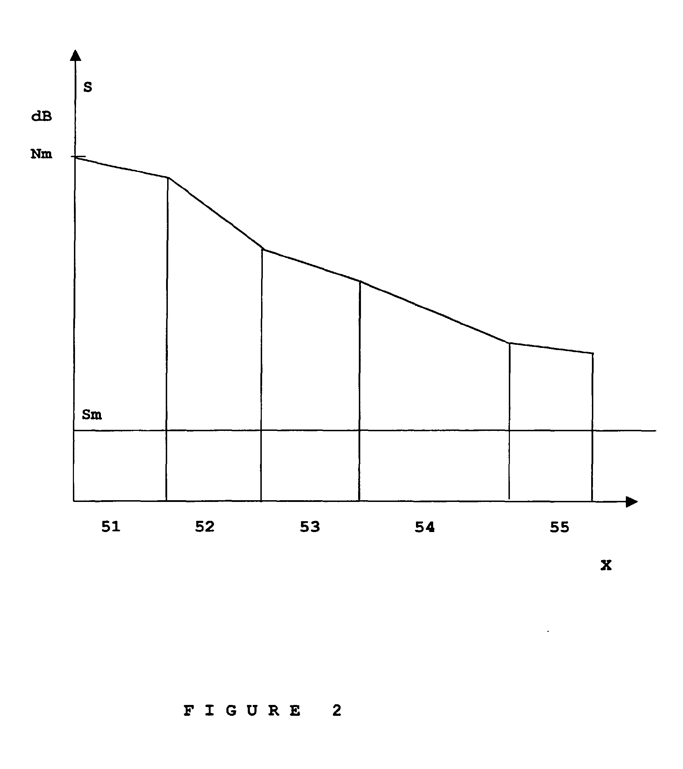

La figure 2 représente en ordonnée, en décibels (dB), le niveau S de signal radio en fonction de la distance X parcourue sur la trajectoire, portée en abscisse. Partant du niveau d'émission, la décroissance du niveau avec la distance de propagation représente donc l'atténuation. Cette atténuation est la somme des atténuations de divers segments ou tronçons de la trajectoire, chaque tronçon correspondant à un milieu de propagation spécifique.

On distingue ici cinq tronçons, référencés dans l'ordre 51 à 55, correspondant respectivement pour le premier 51 à l'atténuation due au trajet aérien allant de la station 11 à un bâtiment 41, pour le second 52 à l'atténuation due à la traversée du bâtiment 41, pour le troisième 53 à l'atténuation due au trajet aérien qui suit jusqu'au bord d'une forêt 42, pour le quatrième 54 à l'atténuation due à la traversée de la forêt 42 et pour le cinquième à l'atténuation due au trajet aérien jusqu'au terminal mobile 21.

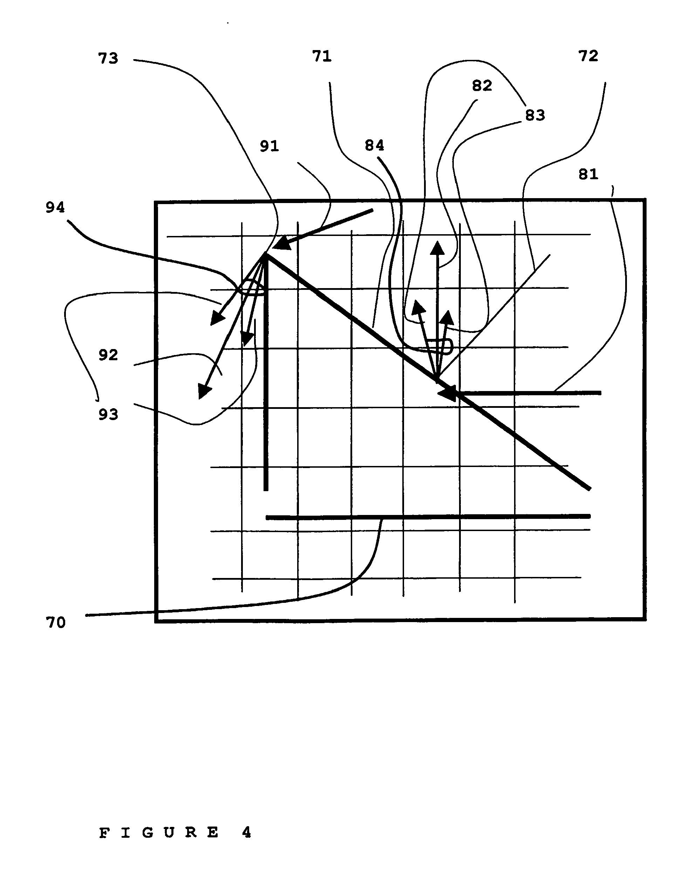

L'atténuation linéique de propagation radio en espace libre dans l'air, représentée par la pente du niveau sur la figure 2, est une constante physique bien connue, pour une fréquence de porteuse déterminée, et le calculateur 30 peut donc, à partir des distances de propagation relevées dans la base de données représentative de la carte 31, calculer les trois atténuations correspondantes. Par contre, les obstacles 41, 42 correspondent à des atténuations accrues. En outre, comme évoqué, certains types d'obstacles peuvent aussi dévier la trajectoire, comme illustré par la figure 4. Or, pour vérifier la couverture radio prévisionnelle, il faut pouvoir estimer par le calcul le niveau de champ en divers points répartis dans toute la cellule 1, pour les liaisons entre la station de base 11 et le terminal mobile 21.

Le bilan de liaison prévisionnel ainsi calculé, ou somme des atténuations associées aux tronçons de trajectoire 51 à 55, ne doit pas excéder l'écart entre un niveau maximal Nm d'émission de la station 11 et un seuil prédéterminé Sm de sensibilité du terminal 21. Il en est de même, pour le sens dit montant de communication du terminal 21 vers la station 11, en ce qui concerne un niveau d'émission maximal du terminal 21, ici 2 watts, et un niveau de sensibilité de la station 11. Ces niveaux de sensibilité tiennent compte d'un code de détection des erreurs de propagation, et de correction d'un nombre limité de bits erronés, dans les paquets de bits échangés à travers des voies temporelles d'une trame radio.

Dans un but d'efficacité, les calculs d'atténuation sur ordinateur ne doivent nécessiter qu'une durée limitée, bien moindre qu'une journée de travail.

Pour ce faire, la carte 31 se présente sous la forme d'une carte géographique numérique en relief représentant la cellule 1 et la base de données 32, 33 spécifie les positions des reliefs comme 41 et 42 et autres, et leurs natures déterminant les conditions de propagation radio, telles que bâtiments élevés, forêt, zone pavillonnaire, lac et autres. Dans une phase initiale, avant la phase d'exploitation de calcul des atténuations, un maillage prédéterminé de la carte 31 est effectué et, à chaque maille 34 de la matrice géographique ainsi déterminée, on associe les données numériques des reliefs qu'elle comporte, pour ainsi disposer d'une base de données matricielle, ou mosaïque, de spécification des reliefs, utilisable dans la phase d'exploitation.

En pratique, un opérateur humain ou le calculateur 30 définit le maillage et stocke, dans les blocs 32 et 33, respectivement les données de forme de relief de chaque maille 34 et les données de nature des reliefs. Comme évoqué plus haut, ces données identifient les reliefs, tels que forêt, bâtiments, et une table générale de correspondance permet d'en déterminer des valeurs de caractéristiques radio, c'est-à-dire de paramètres déterminant les conditions de propagation des rayons atteignant le relief considéré. En variante, les valeurs des paramètres de propagation sont directement stockées dans le bloc 33, sans nécessité de stocker les types des reliefs.

Dans la phase d'exploitation, exécutée en pratique par le calculateur 30, pour l'estimation prévisionnelle de la couverture radio de la cellule 1 par la station de base radio 11 de gestion de trafic de la cellule 1, au moyen de la base de données 32, 33 de carte en relief spécifiant les positions et natures de reliefs comme 41 et 42 de la cellule 1.

Le calculateur lance fictivement dans la cellule un rayon d'échantillonnage représentatif des conditions de propagation radioélectrique, selon un tronçon initial de trajectoire par exemple 11, 41 depuis une position d'origine et selon une direction et des conditions de propagation déterminées, c'est-à-dire en pratique à travers l'air.

Par lecture de la base de données, le calculateur compare le tronçon 11, 41 de trajectoire aux données de carte en relief, précisément ici celles du bloc 32, pour identifier la position et la nature de tout point courant d'impact du tronçon de trajectoire avec un relief 41 dans l'exemple.

D'après la nature spécifiée du relief considéré 41, le calculateur détermine de nouvelles conditions de propagation sur une portion aval de trajectoire 41, 42 (tronçon 52) au-delà du point d'impact en 41.

Le calculateur réitère, le cas échéant, les deux étapes précédentes un nombre déterminé de fois pour d'autres impacts de portions aval 53, 54 de trajectoire.

D'après les conditions de propagation sur la totalité de la trajectoire 11 à 21, le calculateur détermine une atténuation cumulée pour tout point sélectionné de celle-ci, et répète toutes les étapes ci-dessus une pluralité de fois pour une pluralité de directions initiales afin d'échantillonner toute la cellule et ainsi déterminer une carte d'atténuations des points sélectionné.

En outre, ayant préalablement élaboré, dans la phase initiale, la base de données 32, 33 sous la forme d'une matrice, ou mosaïque, de données de spécification locale et autonome de la pluralité de mailles prédéterminées 34 du maillage correspondant de la carte 31, cela permet, dans la phase d'exploitation,

- de comparer la position du point courant au maillage pour identifier la maille d'impact 34, et
- de calculer les conditions de propagation après impact (tronçon 41-42 par exemple) à partir des données de spécification locale et autonome de relief de la maille d'impact 34.

Ainsi, d'une façon générale, la base de données 32, 33 spécifie, dans chaque maille, notamment dans la mémoire 33 l'anisotropie radio locale, c'est-à-dire les distorsions apportées au rayon, telles que déflexion, atténuation, diffraction polarisation et autres. Il est en quelque sorte défini, pour chaque maille 34, un ellipsoïde d'anisotropie déterminant les conditions de propagation dans l'espace, ellipsoïde rapporté à trois directions propres, par exemple trois vecteurs unitaires orthogonaux d'abscisse, ordonnée, tels que parallèle, méridien et verticale locaux.

L'ellipsoïde ci-dessus est en fait multiple, car il spécifie les valeurs de plusieurs variables de propagation, permettant de calculer par exemple la direction d'émergence d'un rayon incident en fonction de son angle d'arrivée, sur la carte 31, ou encore l'atténuation correspondante de traversée de la maille 34, en fonction des deux directions, d'incidence et d'émergence. Il s'agit donc d'une matrice de transformation des conditions de propagation des diverses mailles, dont les données sont stockées par zones indépendantes dans le bloc 33.

La lecture, dans le bloc 33, de la zone appropriée associée à la maille d'impact 34 permet donc de déterminer rapidement les conditions de propagation de sortie de la maille à partir du tronçon de trajectoire d'entrée par exemple 11, 41. En particulier, un bit par maille 34 peut spécifier si la maille 34 considérée contient ou non un obstacle. Par lecture directe de celui-ci, éventuellement rangé avec ses homologues dans un registre de taille limitée et à accès rapide, une absence d'indication d'obstacle est ainsi immédiatement détectée et le calculateur 30 passe immédiatement à l'examen de la maille suivante, sans calcul de nouvelles conditions de propagation. Ainsi, hormis la lecture du bit indicateur de présence d'obstacle, le calculateur 30 ne consulte alors pas le bloc de données 33 spécifiant la nature des obstacles radio. Un calcul d'atténuation de point courant, de maille en maille, sur la trajectoire n'est pas nécessaire. L'atténuation cumulée peut en effet être calculée uniquement en cas d'obstacle, par calcul de la distance entre les deux mailles 34 d'extrémité du tronçon considéré. L'expérience a montré que les calculs pour une cellule de 500 mètres de rayon moyen nécessitent environ 1 minute de calculateur de puissance moyenne.

Le calculateur 30 ayant fixé ou calculé l'angle du rayon incident, dans l'espace de la carte 31, peut ainsi directement lire, dans le bloc 33, toutes les valeurs correspondantes des paramètres de propagation du rayon sortant de la maille 34, si le rayon peut effectivement en sortir.

On notera que, la carte 31 étant en relief, le maillage des données est de préférence, comme dans cet exemple, effectué en trois dimensions indépendantes, comme celles évoquées ci-dessus. En d'autres termes, on peut définir un maillage bidirectionnel de mailles 34 dites horizontales, à chaque maille horizontale 34 correspondant un volume à extension verticale découpé à diverses altitudes, éventuellement spécifiques à chaque maille horizontale 34, par des plans ou autres surfaces, afin de déterminer des volumes élémentaires ayant chacun des données de propagation particulières stockées dans une zone du bloc 33. Dans la plupart des cas, il suffit de deux volumes élémentaires par maille horizontale 34, celui de dessous contenant par exemple la totalité d'un immeuble, et celui de dessus correspondant à l'espace libre. Dans le cas par contre de reliefs avec surplomb, tels qu'immeubles en arche ou ponts, un troisième volume élémentaire, à propagation libre, est à prévoir sous un volume élémentaire contenant l'obstacle considéré.

En d'autres termes, on représente la carte 31 par un faisceau de chaînes de pixels à extension verticale, pour chaque maille 34, et on découpe les chaînes de pixels pour constituer des volumes élémentaires empilés de mailles volumiques ayant chacun des données particulières.

Les données de spécification des caractéristiques ou nature des reliefs de chaque maille 34, intégrées lors de la phase initiale, peuvent correspondre à l'une ou plusieurs des données suivantes.

Les données de spécification des reliefs de la mémoire 32 peuvent consister en des données d'orientation géographique des reliefs, indiquant par exemple un plan de réflexion radio. Connaissant la portion ou segment de trajectoire incidente, on en déduit par calcul la direction de la portion de trajectoire aval réfléchie, qui en est le symétrique par rapport à la normale au plan de réflexion au point d'impact. Dans l'air, en l'absence d'obstacle dans le premier ellipsoïde de Fresnel (propagation directe), l'atténuation en champ proche est d'environ 20 dB/km sur les 500 premiers mètres de trajectoire ; au-delà, on prend la valeur 30 dB/km.

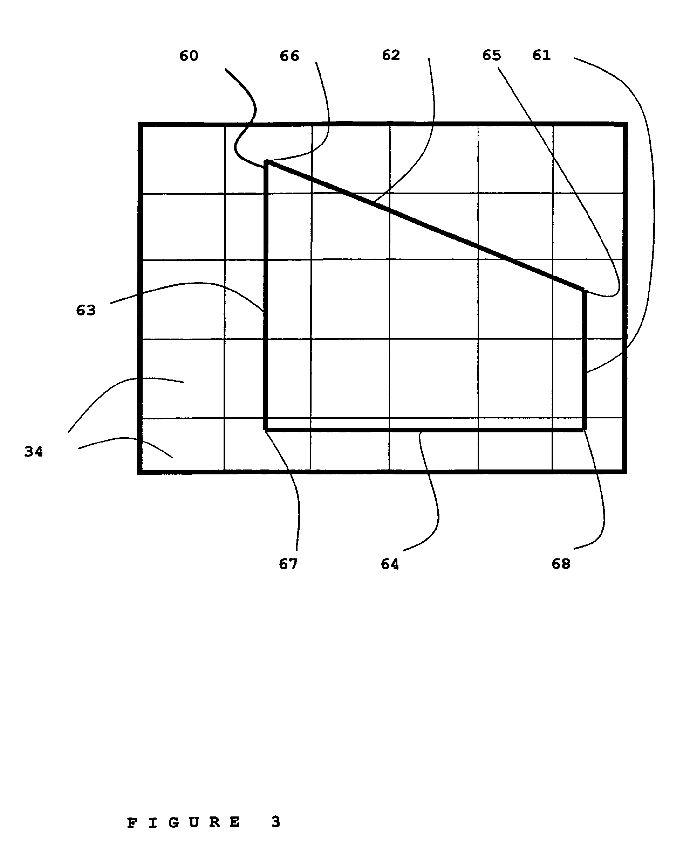

La figure 3 illustre ainsi le contenu d'une table de données en matrice du bloc 33, contenu qui est présenté schématiquement sous la forme graphique d'une partie de la carte 31, afin d'être expliqué plus clairement.

La figure 3 représente quelques mailles horizontales 34 sur lesquelles on a reporté la surface occupée par un immeuble. L'immeuble considéré comporte quatre murs rectilignes, référencés 61 à 64, et présente une forme de trapèze avec quatre coins de murs ou arêtes verticales 65 à 68.

Dans le bloc 33, les quatre mailles comportant l'une des arêtes de mur comportent des données spécifiant cette caractéristique. Il peut en outre être prévu de spécifier la valeur de l'angle de l'arête et même l'orientation de ses côtés. Les autres mailles 34 traversées par l'un des murs 61 à 64 comportent des données spécifiant cette particularité. En pratique ici, ces données spécifient l'orientation du mur considéré, c'est-à-dire sa direction azimutale. Il peut être prévu de spécifier aussi l'inclinaison du relief lorsqu'il s'agit de reliefs autres, par exemple naturels. En pareil cas, ces données d'orientation du plan du relief peuvent être définies par la normale au relief, exprimée par exemple selon les coordonnées tridimensionnelles évoquées plus haut.

Pour toutefois limiter la taille du bloc 33, il peut être prévu de limiter les données d'orientation du relief aux données d'azimut, et, en exploitation, la direction du rayon réfléchi de tronçon aval est calculée en considérant que les reliefs de réflexion du rayon considéré sont verticaux, ce qui est le cas général en ville.

On peut aussi intégrer, dans le bloc 33 de la base de données matricielle, des données spécifiant une nature de sursol, tel que forêt, zone pavillonnaire et autres, et, en exploitation, le système 30 calcule les conditions de propagation sur le tronçon aval d'après la nature de sursol telle que spécifiée.

Dans la phase initiale, si l'on intègre les données d'arêtes des reliefs dans le bloc 33 de la base de données matricielle, cela permet, en exploitation, de calculer une direction de tronçon aval du rayon réfracté à partir des données d'arêtes. Comme indiqué, la réfraction est provoquée en général par des coins ou arêtes verticales de bâtiments. Toutefois, des bords et arêtes de crête de toitures peuvent de même être spécifiés dans le bloc 33 pour déterminer de même une direction de réfraction du rayon incident, ainsi défléchi vers le bas par exemple. Les déflexions ci-dessus accroissent la taille de la zone de couverture de la cellule 1 puisqu'elles dirigent le rayon réfracté vers un volume qui, en propagation linéaire, serait une zone d'ombre.

Dans la phase initiale, le système intègre dans la mémoire des données d'atténuation des reliefs dans la base de données matricielle 33 et, en exploitation, le système détermine une atténuation du rayon à partir des données d'atténuation ci-dessus.

Les données d'atténuation peuvent concerner la réflexion sur les reliefs 60 et elles sont alors utilisées pour calculer l'atténuation de rayons réfléchis, par exemple environ 7 dB, valeur qui dépend de la nature morphologique de la façade, telle que verre, brique ou autre.

En outre ou à la place, les données d'atténuation peuvent concerner la propagation à travers les reliefs 41, 42, 60 et elles sont alors utilisées pour calculer l'atténuation des rayons qui s'y propagent, comme illustré sur la figure 2.

En particulier, les données d'atténuation de propagation à travers les reliefs 41, 42 peuvent comporter en outre des données de transition de milieux de propagation, spécifiant des atténuations de pénétration dans les reliefs, ou de changement de milieu de propagation, qui sont utilisées pour déterminer une atténuation locale de pénétration, air / bâtiment par exemple.

La figure 4 est homologue de la figure 3 mais l'immeuble 70 qu'elle représente a, en vue de dessus, une forme simplifiée, triangulaire dans cet exemple, pour la simplicité de l'exposé. Un rayon incident 81 atteint un point d'une façade 71 de l'immeuble 70, point d'impact qui est situé dans une maille 34 traversée par la façade 71.

D'après les données correspondantes de la maille du bloc 33, indiquant la direction azimutale de la façade 71 et indiquant que la maille 34 considérée est (entièrement) traversée par la façade 71, le calculateur 30 détermine que le rayon incident 81 s'y réfléchit selon un rayon 82 dont il calcule la direction d'émergence, direction qui forme, avec la normale locale 72 à la façade 71, un angle égal et opposé à celui du rayon incident 81.

Comme représenté, le rayon réfléchi 82 définit en fait la direction principale d'un lobe 84 de rayons annexes 83 qui l'entourent, formant donc, dans l'espace, un angle solide. En effet, le rayon 81 excite la zone qu'il atteint et il engendre ainsi une source secondaire qui diffuse le rayonnement électromagnétique selon un diagramme plus diffus, c'est-à-dire plus isotrope, qu'une source primaire classique.

Afin de mieux modéliser la propagation, dans cet exemple le système détermine, par un algorithme de calcul de dispersion angulaire, la pluralité de directions des rayons 82 et 83, avec des atténuations spécifiques, formant l'angle solide de diffusion du rayon incident 81 au-delà du point d'impact. Ceci peut concerner les rayons réfléchis par des surfaces inhomogènes, telles que façades d'immeubles avec fenêtres et balcons, et les rayons diffractés. Pour illustrer ces derniers, un rayon incident 91 atteint encore la façade 71 mais dans une zone d'arête verticale 73. Les données du bloc 33 de la maille 34 considérée spécifient alors la présence de l'arête, en indiquant une direction de diffraction principale pour un rayon émergent 92 et un angle solide 94 de rayons diffractés annexes 93. L'explication ci-dessus est aussi valable pour des arêtes inclinées sur la verticale. On peut donc en particulier aussi considérer la figure 4 comme étant une coupe verticale d'un relief, à travers des rangées horizontales superposées de mailles, illustrant le fait que le rayon diffracté peut « plonger » vers le sol, dans un volume que l'on pourrait a priori supposer être une zone d'ombre radio.

On notera que le bloc 33 peut contenir à la fois des données d'orientation pour calculer une réflexion partielle (82) et des données de calcul d'un rayon réfracté 92, si l'on considère que le rayon incident 81, 91 présente une section de l'ordre de grandeur d'une maille 34, qui n'est affectée que partiellement par la présence de l'arête 73.

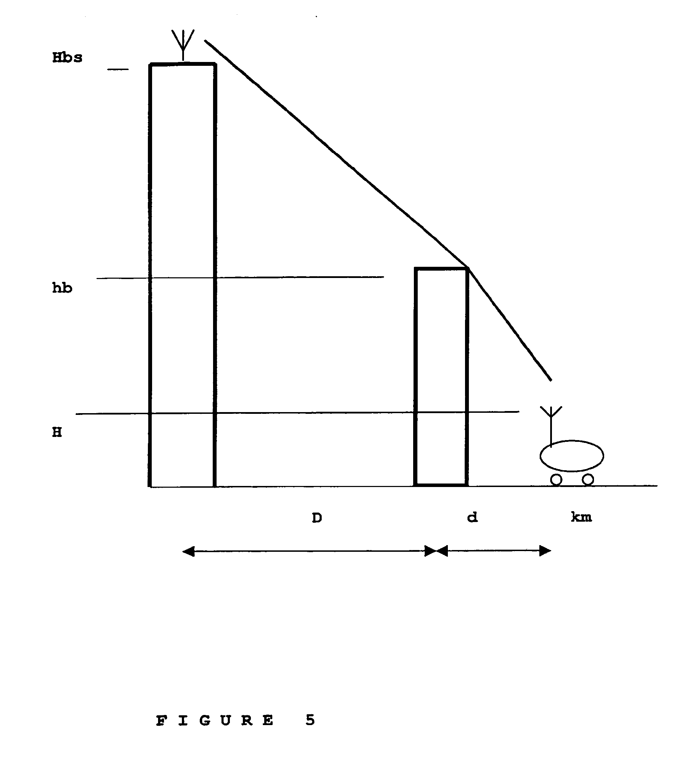

En référence à la figure 5, l'atténuation de diffraction sur un toit Ltàm (toit à mobile), peut se calculer par la formule suivante :

$$Ltàm = -16,9 - 10 \log (W) \quad + 10 \log (f) + 20 \log (hb - Hm)$$

ou pris = 0 , si le calcul ci-dessus donne Ltàm < 0

avec

W : largeur d'une rue de réception vue de l'antenne de la station 11,

F : fréquence en MHz

Hb : hauteur du toit diffractant vers le mobile 21

Hm : hauteur d'antenne du mobile 21

Afin d'améliorer encore la précision des estimations d'atténuation, on compte dans cet exemple les impacts successifs sur la trajectoire (51 à 55 ; 81, 82 ; 91, 92) et, en cas de deuxième impact, on considère, pour déterminer les conditions de propagation au-delà de cet impact, que le rayon a été polarisé lors du premier impact. En effet, un rayon qui a été réfléchi ou réfracté par une façade d'immeuble subit une polarisation, au moins partielle, sensiblement verticale. De ce fait, faute des composantes de polarisation horizontale, éliminées lors du premier impact et qui représentaient une grande partie de l'atténuation totale, l'atténuation a une valeur réduite lors des impacts suivants. Le rayon a ainsi en quelque sorte été adapté aux obstacles. L'atténuation de réflexion passe ainsi, en moyenne, de 7 dB pour la première réflexion à 3 dB pour les suivantes.

Afin de disposer de données de couverture radio aux divers étages des immeubles et pour aussi traiter les formes en surplomb évoquées plus haut, dans cet exemple on établit en trois dimensions la carte ou base terrain des atténuations.

Pour éviter de prolonger inutilement le temps de calcul, le système compte les impacts successifs du rayon et on compare le total à une valeur de seuil haut pour cesser d'exécuter les étapes du procédé lorsque le seuil est atteint.

Dans le même but, en complément ou à la place, à chaque impact, le système détermine l'atténuation cumulée et la compare à une valeur de seuil d'atténuation maximale pour cesser d'exécuter les étapes du procédé lorsque le seuil est atteint.

On remarquera que l'on peut, en variante de cet exemple particulier, appliquer le principe de retour inverse du rayon, c'est-à-dire l'émettre depuis la position quelconque du terminal 21 en direction de la station 11, en déplaçant comme précédemment la position du terminal 21 dans toute la cellule 1.

Toutefois, en pareil cas, il existe une certaine incertitude pour le succès de chaque essai, puisqu'un rayon émis en direction de la station 11 risque d'être dévié et que, inversement, un rayon émis dans une autre direction subira une déviation par un relief et l'atteindra. Il faudra donc prévoir un nombre accru de lancers de rayons, par exemple dans un grand angle solide contenant la station 11, compte tenu des déviations prévisibles, par exemple un toit d'immeuble à effet de réfraction, proche du terminal 21.

Ainsi, on peut prendre, comme position d'origine, une position prévue pour la station 11, ou bien on prend, comme position d'origine, une position quelconque dans la cellule 1 et la direction de lancement du rayon est choisie, d'après les positions et natures des reliefs proches, pour qu'elle passe à proximité de la station 11. Ainsi, une proportion suffisante de calculs est exploitable.

Le procédé peut en particulier être utilisé pour des microcellules en contact avec, sinon incluses dans, des (macro)cellules. Compte tenu de la hauteur élevée des antennes de ces dernières, la propagation y est moins perturbée et les calculs peuvent y être effectués par un procédé classique de propagation. Ayant aussi calculé, selon le présent procédé, les conditions de propagation dans une microcellule en contact avec une (macro)cellule, on calcule des conditions de propagation dans la cellule et on effectue ensuite un calcul de lissage des résultats des deux calculs relatifs à une zone de frontière entre cellule et microcellule

La carte 31 a ici un pas de maillage du terrain d'environ 5 mètres selon des parallèles et méridiens. Elle peut en particulier être obtenue par interpolation linéaire à partir d'une carte altimétrique de l'IGN à plus petite échelle, à mailles sensiblement sous la forme de grands carrés de 50 mètres de côté, ayant une base de données vectorielle définissant, outre l'altimétrie du terrain, les positions des reliefs et leurs natures. Le système de calcul maille celle-ci au pas de 5 mètres, en découpant chaque grand carré en cent petits carrés de 5 mètres de côté. La surface délimitée par chaque petit carré détermine ainsi un sous-ensemble correspondant des données définissant les positions et natures des reliefs.

Ensuite, le système de calcul effectue un lissage, ou filtrage spatial passe-bas, par un calcul d'interpolation prenant en compte les données d'altimétrie ci-dessus des grands carrés voisins de celui considéré, ceci en ligne, en colonne et en diagonale. Le calculateur 30 module ainsi par exemple les données d'altitude du sol moyen du grand carré considéré pour y déterminer une valeur locale la plus probable pour chaque petit carré, pour obtenir ainsi un sous-bloc matriciel de données d'altimétrie, constituant l'une de la pluralité de zones du bloc 32.

D'autres données d'ordre global, par exemple de spécification du sursol, tel que forêt, zone pavillonnaire, terrain vide ou autres, peuvent être calculées de cette façon. Les données d'ordre plus ponctuel, spécifiant par exemple une orientation de façade d'immeuble pour le bloc 33, sont par contre, de préférence, établies d'après des relevés effectués sur le terrain, par exemple des photos aériennes. Le sous-bloc matriciel de données de sursol est de préférence, comme ici, complété par un sous-bloc matriciel de données de hauteur du sursol, obtenues par différence entre l'altitude de ce dernier et l'altitude du sol, par rapport à la mer. Les données des blocs 32, 33 sont ainsi plus précises et à jour.

**Revendications**

1. Procédé d'estimation prévisionnelle de la couverture radio d'une cellule (1), d'un réseau de radiotéléphonie cellulaire, par une station radio (11) de gestion de trafic de la cellule (1), au moyen d'une base de données (32, 33) de carte en relief (31) spécifiant des positions et natures de reliefs (41, 42) de la cellule (1), procédé dans lequel, un système de calcul dans une phase d'exploitation,

   - lance fictivement dans la cellule (1) un rayon d'échantillonnage représentatif des conditions de propagation radioélectrique, selon un tronçon initial de trajectoire (51) depuis une position d'origine et selon une direction et des conditions de propagation déterminées,
   - par lecture de la base de données (32, 33), le système de calcul compare le tronçon de trajectoire (51) aux données de carte en relief (31) pour identifier la position et la nature de tout point courant d'impact du tronçon de trajectoire (51) avec un relief (41, 42),
   - d'après la nature spécifiée dans la base de données du relief considéré (41, 42), le système de calcul détermine de nouvelles conditions de propagation sur un tronçon aval de trajectoire (52) au-delà du point d'impact,
   - le système de calcul réitère, le cas échéant, les deux étapes précédentes un nombre déterminé de fois pour d'autres impacts de tronçons aval (52 - 55) de trajectoire,
   - d'après les conditions de propagation sur la totalité de la trajectoire, le système de calcul détermine une atténuation cumulée pour tout point sélectionné de celle-ci, et
   - le système de calcul répète toutes les étapes ci-dessus une pluralité de fois pour une pluralité de directions initiales afin d'échantillonner toute la cellule (1) et ainsi déterminer une carte d'atténuations des points sélectionnés,

   procédé **caractérisé par le fait que**,
   dans une phase initiale,

   - le système élabore la base de données (32, 33) sous la forme d'une matrice de données, à accès direct, de spécification locale et autonome des positions et natures des reliefs respectifs (41, 42) d'une pluralité de mailles prédéterminées d'un maillage correspondant de la carte (31), et,
   - le système mémorise des données d'orientation géographique des reliefs dans la base de données matricielle (32, 33)

   dans la phase d'exploitation, le système de calcul

   - compare la position du point courant au maillage pour identifier une maille d'impact,
   - calcule les conditions de propagation après impact à partir des données de spécification locale et autonome de relief de la maille d'impact, et
   - calcule une direction d'un rayon réfléchi de tronçon aval (52) à partir des données d'orientation.

2. Procédé selon la revendication 1, dans lequel la mémorisation se limite à des données d'azimut et, en exploitation, la direction du rayon réfléchi de tronçon aval (82) est calculée en considérant que les reliefs de réflexion (71) sont verticaux.

3. Procédé selon l'une des revendications 1 à 2, dans lequel on intègre, dans la base de données matricielle (32, 33), des données spécifiant une nature de sursol et, en exploitation, le système calcule les conditions de propagation sur le tronçon aval (52) d'après ladite nature de sursol.

4. Procédé selon l'une des revendications 1 à 3, dans lequel, dans la phase initiale, on intègre des données d'arêtes (73) des reliefs dans la base de données matricielle (32, 33) et, en exploitation, le système de calcul calcule une direction de tronçon aval de rayon réfracté (92) à partir desdites données d'arêtes.

5. Procédé selon l'une des revendications 1 à 4, dans lequel, dans la phase initiale, des données d'atténuation des reliefs (41, 42) sont mémorisées dans la base de données matricielle (32, 33) et, en exploitation, le système calcule une atténuation de propagation sur le tronçon aval à partir desdites données d'atténuation.

**6.** Procédé selon la revendication 5, dans lequel les données d'atténuation concernent la réflexion sur les reliefs (41, 42) et sont utilisées pour calculer l'atténuation sur le tronçon aval (52).

**7.** Procédé selon l'une des revendications 5 et 6, dans lequel les données d'atténuation concernent la propagation à travers les reliefs (41, 42) et sont utilisées pour calculer l'atténuation des rayons qui s'y propagent.

**8.** Procédé selon la revendication 7, dans lequel les données d'atténuation de propagation à travers les reliefs (41, 42) comportent en outre des données de transition entre milieux de propagation, spécifiant des atténuations de pénétration dans les reliefs (41, 42), qui sont utilisées pour déterminer une atténuation locale de pénétration.

**9.** Procédé selon l'une des revendications 1 à 8, dans lequel, disposant d'un algorithme de calcul de dispersion angulaire du rayon après impact, le système calcule une pluralité de directions de tronçons aval, avec des atténuations spécifiques, formant un angle solide (84) de diffusion du rayon au-delà de l'impact.

**10.** Procédé selon l'une des revendications 1 à 9, dans lequel le système compte les impacts successifs sur la trajectoire et, en cas de deuxième impact, le système considère, pour calculer lesdites conditions de propagation au-delà, que le rayon a été polarisé lors du premier impact.

**11.** Procédé selon l'une des revendications 1 à 10, dans lequel le système compte les impacts successifs sur la trajectoire et compare le total à une valeur de seuil haut pour cesser d'exécuter les étapes du procédé lorsque le seuil est atteint.

**12.** Procédé selon l'une des revendications 1 à 11, dans lequel, à chaque impact, le système détermine l'atténuation de propagation cumulée et la compare à une valeur de seuil d'atténuation maximale pour cesser d'exécuter les étapes du procédé lorsque le seuil est atteint.

**13.** Procédé selon l'une des revendications 1 à 12, dans lequel la carte des atténuations est mémorisée en trois dimensions.

**14.** Procédé selon l'une des revendications 1 à 13, dans lequel, pour élaborer la base de données (32, 33), le système représente la carte (31) par un faisceau de chaînes de pixels à extension verticale et découpe les chaînes de pixels pour constituer des volumes élémentaires empilés de mailles volumiques ayant chacun des données particulières.

**15.** Procédé selon l'une des revendications 1 à 14, dans lequel le système prend, comme position d'origine, une position prévue pour la station (11).

**16.** Procédé selon l'une des revendications 1 à 14, dans lequel le système prend, comme position d'origine, une position quelconque dans la cellule et la direction de lancement du rayon est choisie, d'après les positions et natures des reliefs proches, pour que le rayon passe à proximité de la station (11).

**17.** Procédé selon l'une des revendications 1 à 16, dans lequel, ayant ainsi calculé les conditions de propagation dans une microcellule en contact avec une cellule, le système calcule des conditions de propagation dans la cellule et effectue ensuite un calcul de lissage des résultats des deux calculs relatifs à une zone de frontière entre cellule et microcellule.

**Claims**

**1.** Method of predictive estimation of the radio coverage of a cell (1) of a cellular wireless telephone network by a radio station (11) for management of the traffic of the cell (1), by means of a database (32, 33) of a relief map (31) specifying positions and natures of reliefs (41, 42), a method in which during one phase of operation a computer system

- fictitiously sends into the cell (1) a sampling beam which represents the radio wave propagation conditions along an initial section of a trajectory (51) from an initial position and in one direction and under specific propagation conditions,
- by reading the database (32, 33) the computer system compares the trajectory section (51) with the data of the relief map (31) in order to identify the position and the nature of any current point of incidence of the trajectory section (51) with a relief (41, 42),
- according to the nature specified in the database for the relief (41, 42) under consideration, the computer system determines new propagation conditions on a downstream trajectory section (52) beyond the point of incidence,
- the computer system reiterates, as need be, the previous two steps a defined number of times for other points of incidence of downstream trajectory sections (52 to 55),
- according to the propagation conditions over the total trajectory, the computer system determines a cumulative attenuation for any selected point on the said path, and
- the computer system repeats all the above steps a plurality of times for a plurality of initial directions in order to sample the entire cell (1) and thus to determine a map of attenuations of the selected points,

the method being **characterised in that**
in an initial phase,

- the system devises the database (32, 33) in the form of a direct-access matrix of data for local and independent specification of the positions and natures of the respective reliefs (41, 42) of a plurality of predetermined squares of a corresponding grid of the map (31), and
- the system stores the geographic orientation data of the reliefs in the matrix database (32, 33),

in the operational phase, the computer system

- compares the position of the point with the grid in order to identify a square where incidence occurs,
- computes the propagation conditions after incidence on the basis of the data for local and independent specification of the square where incidence occurs, and
- computes a direction of a reflected beam of a downstream section (52) on the basis of the orientation data.

2. Method as claimed in Claim 1, wherein the storage is limited to azimuth data and, in operation, the direction of the reflected beam of the downstream trajectory (82) is computed on the assumption that the reflecting reliefs (71) are vertical.

3. Method as claimed in either Claim 1 or Claim 2, wherein data specifying the nature of the above-ground structure are integrated into the matrix database (32, 33) and wherein, during operation, the computer system computes the propagation conditions on the downstream section (52) according to the said nature of the above-ground structure.

4. Method as claimed in any one of Claims 1 to 3, wherein, in the initial phase, data concerning edges (73) of the reliefs are integrated into the matrix database (32, 33) and, in operation, the computer system computes a direction of the downstream section of the refracted beam (92) on the basis of the said edge data.

5. Method as claimed in any one of Claims 1 to 4, wherein, in the initial phase, attenuation data of the reliefs (41, 42) are stored in the matrix database (32, 33) and, in operation, the system computes a propagation attenuation on the downstream section on the basis of the said attenuation data.

6. Method as claimed in Claim 5, wherein the attenuation data relate to reflection on the reliefs (41, 42) and are used in order to compute the attenuation on the downstream section (52).

7. Method as claimed in any one of Claims 5 and 6, wherein the attenuation data relate to propagation through the reliefs (41, 42) and are used in order to calculate the attenuation of the beams propagating there.

8. Method as claimed in Claim 7, wherein the data concerning propagation attenuation through the reliefs (41, 42) further comprise data concerning transition between propagation media, specifying attenuations of penetration into the reliefs (41, 42) which are used in order to determine a local attenuation of penetration.

9. Method as claimed in any one of Claims 1 to 8, wherein, using an algorithm for calculation of angular dispersion of the beam after incidence, the system computes a plurality of directions of downstream sections with specific attenuations, forming a solid angle (84) of diffusion of the beam beyond the incidence.

10. Method as claimed in any one of Claims 1 to 9, wherein the system counts the successive incidences on the trajectory and, in the event of a second incidence, the system assumes that the beam was polarised during the first incidence in order to compute the said conditions of propagation beyond it.

11. Method as claimed in any one of Claims 1 to 10, wherein the system counts the successive incidences on the trajectory and compares the total with a high threshold value in order to stop execution of the method steps when said threshold is reached.

12. Method as claimed in any one of Claims 1 to 11, wherein at each incidence the system determines the cumulative propagation attenuation and compares it with a maximum attenuation threshold in order to stop execution of the method steps when the threshold is reached.

13. Method as claimed in any one of Claims 1 to 12, wherein the attenuation map is stored in three dimensions.

14. Method as claimed in any one of Claims 1 to 13, wherein, in order to devise the database (32, 33), the system represents the map (31) by a bundle of vertically extending pixel chains and divides up the pixel chains in order to constitute stacked basic volumes of volume squares each having specific data.

15. Method as claimed in any one of Claims 1 to 14, wherein the system takes as the initial position a position which is provided the initial position for the station (11).

16. Method as claimed in any one of Claims 1 to 14, wherein the system takes any position in the cell as the initial position and the direction of beam transmission is selected according to the positions and the natures of the reliefs in the vicinity in order that the beam passes close to the station (11).

17. Method as claimed in any one of Claims 1 to 16, wherein, after having thus computed the propagation conditions in a microcell in contact with a cell, the system computes propagation conditions in the cell and then effects a computation for smoothing of the results of the two computations relating to a boundary zone between the cell and the microcell.

**Patentansprüche**

1. Verfahren für das Vorausschätzen der Funkabdeckung einer Zelle (1) eines zellulären Funktelefonnetzwerks durch eine Funkstation (11) für die Verkehrsverwaltung der Zelle (1) mittels einer Datenbank (32, 33) einer Reliefkarte (31), die Positionen und Beschaffenheiten von Reliefs (41, 42) der Zelle (1) spezifiziert, wobei ein Rechensystem in dem Verfahren in einer Nutzungsphase

- in der Zelle (1) einen Abtaststrahl, der für die Funkausbreitungsbedingungen repräsentativ ist, fiktiv entlang einer Anfangs-Teil-Trajektorie (51) von einer Ausgangsposition aus und entlang einer Richtung und gemäß bestimmten Ausbreitungsbedingungen aussendet,
- das Rechensystem durch Lesen der Datenbank (32, 33) die Teil-Trajektorie (51) mit den Reliefkartendaten (31) vergleicht, um die Position und die Beschaffenheit jedes aktuellen Auftreffpunktes der Teil-Trajektorie (51) mit einem Relief (41, 42) zu identifizieren,
- das Rechensystem gemäß der in der Datenbank spezifizierten Beschaffenheit des betreffenden Reliefs (41, 42) neue Bedingungen für die Ausbreitung auf einer abwärtsseitigen Teil-Trajektorie (52) jenseits des Auftreffpunktes bestimmt,
- das Rechensystem gegebenenfalls die beiden vorhergehenden Schritte eine bestimmte Anzahl von Malen für weitere Auftreffpunkte von abwärtsseitigen Teil-Trajektorien (52 bis 55) wiederholt,
- das Rechensystem gemäß den Ausbreitungsbedingungen auf der gesamten Trajektorie eine kumulierte Dämpfung für jeden ausgewählten Punkt derselben bestimmt, und
- das Rechensystem alle oben aufgezählten Schritte eine Mehrzahl von Malen für eine Mehrzahl von Anfangsrichtungen wiederholt, um die gesamte Zelle (1) abzutasten und so eine Karte von Dämpfungen für die ausgewählten Punkte zu erhalten,

wobei das Verfahren **dadurch gekennzeichnet ist, dass**:

in einer Anfangsphase

- das System die Datenbank (32, 33) in Form einer Datenmatrix mit Direktzugriff zum lokalen und unabhängigen Spezifizieren der Positionen und Beschaffenheiten der jeweiligen Reliefs (41, 42) mit einer Mehrzahl von vorbestimmten Maschen eines entsprechenden Gitternetzes der Karte (31) erstellt, und

- das System Daten über die geographische Ausrichtung der Reliefs in der Matrix-Datenbank (32, 33) speichert,

und in der Nutzungsphase das Rechensystem

- die Position des aktuellen Punktes mit dem Gitternetz vergleicht, um eine Auftreffmasche zu identifizieren,
- die Ausbreitungsbedingungen nach dem Auftreffen ausgehend von den Daten zur lokalen und unabhängigen Relief-Spezifizierung der Auftreff-Masche berechnet, und
- eine Richtung eines reflektierten Strahls einer abwärtsseitigen Teil-Trajektorie (52) ausgehend von den Ausrichtungsdaten berechnet.

2. Verfahren gemäß Anspruch 1, wobei das Speichern auf Azimut-Daten beschränkt ist und bei der Nutzung die Richtung des reflektierten Strahls eines abwärtsseitigen Abschnitts (82) unter Berücksichtigung dessen, dass die Reflexionsreliefs (71) vertikal sind, berechnet wird.

3. Verfahren gemäß einem der Ansprüche 1 bis 2, wobei Daten in die Matrix-Datenbank (32, 33) integriert werden, die eine Beschaffenheit eines Bereichs über dem Boden spezifizieren, und das System bei der Nutzung die Bedingungen der Ausbreitung auf dem abwärtsseitigen Teilabschnitt (52) gemäß der Beschaffenheit des Bereichs über dem Boden berechnet.

4. Verfahren gemäß einem der Ansprüche 1 bis 3, wobei in der Anfangsphase Daten von Rändern (73) der Reliefs in die Matrix-Datenbank (32, 33) integriert werden, und wobei das Rechensystem bei der Nutzung eine Richtung eines abwärtsseitigen Teilabschnitts eines reflektierten Strahls (92) ausgehend von den Randdaten berechnet.

5. Verfahren gemäß einem der Ansprüche 1 bis 4, wobei in der Anfangsphase Dämpfungsdaten der Reliefs (41, 42) in der Matrix-Datenbank (32, 33) gespeichert werden, und das System bei der Nutzung eine Ausbreitungsdämpfung auf dem stromabwärtsseitigen Teilabschnitt ausgehend von den Dämpfungsdaten berechnet.

6. Verfahren gemäß Anspruch 5, wobei die Dämpfungsdaten die Reflexion auf den Reliefs (41, 42) betreffen und zum Berechnen der Dämpfung auf dem abwärtsseitigen Teilabschnitt (52) verwendet werden.

7. Verfahren gemäß einem der Ansprüche 5 und 6, wobei die Dämpfungsdaten die Ausbreitung durch die Reliefs (41, 42) hindurch betreffen und zum Berechnen der Dämpfung der Strahlen verwendet werden, die sich dort ausbreiten.

8. Verfahren gemäß Anspruch 7, wobei die Daten für die Dämpfung der Ausbreitung durch die Reliefs (41, 42) hindurch ferner Übergangsdaten zwischen Übertragungsmedien aufweisen, die Durchdringungsdämpfungen in den Reliefs (41, 42) spezifizieren, die zum Bestimmen einer lokalen Durchdringungsdämpfung verwendet werden.

9. Verfahren gemäß einem der Ansprüche 1 bis 8, wobei das System, das einen Algorithmus zur Berechnung der Winkeldispersion des Strahles nach dem Auftreffen aufweist, eine Mehrzahl von Richtungen von abwärtsseitigen Teilabschnitten mit spezifischen Dämpfungen berechnet, wobei ein Strahldiffusions-Raumwinkel (84) jenseits des Auftreffpunktes gebildet wird.

10. Verfahren gemäß einem der Ansprüche 1 bis 9, wobei das System die aufeinanderfolgenden Auftreffpunkte auf der Trajektorie zählt, und wobei das System im Fall eines zweiten Auftreffens zum Berechnen der Ausbreitungsbedingungen darüber hinaus berücksichtigt, dass der Strahl beim ersten Auftreffen polarisiert wurde.

11. Verfahren gemäß einem der Ansprüche 1 bis 10, wobei das System die aufeinanderfolgenden Auftreffpunkte auf der Trajektorie zählt und die Gesamtheit mit einem Hohe-Schwelle-Wert vergleicht, um das Ausführen der Schritte des Verfahrens anzuhalten, wenn die Schwelle erreicht ist.

12. Verfahren gemäß einem der Ansprüche 1 bis 11, wobei das System bei jedem Auftreffen die kumulierte Ausbreitungsdämpfung bestimmt und diese mit einem Maximal-Dämpfungs-Schwellenwert vergleicht, um das Ausführen der Schritte des Verfahrens anzuhalten, wenn die Schwelle erreicht ist.

13. Verfahren gemäß einem der Ansprüche 1 bis 12, wobei die Dämpfungskarte dreidimensional gespeichert wird.

14. Verfahren gemäß einem der Ansprüche 1 bis 13, wobei das System die Karte (31) zum Erstellen der Datenbank (32, 33) durch ein Bündel von Pixelketten mit vertikaler Ausdehnung darstellt und die Pixelketten aufteilt, um gestapelte Elementarvolumina von Volumenmaschen zu bilden, die jeweils bestimmte Daten aufweisen.

15. Verfahren gemäß einem der Ansprüche 1 bis 14, wobei das System als Ausgangsposition eine Position einnimmt, die für die Station (11) vorgesehen ist.

16. Verfahren gemäß einem der Ansprüche 1 bis 14, wobei das System als Ausgangsposition irgendeine Position in der Zelle einnimmt und die Richtung für das Aussenden des Strahls gemäß den Positionen und Beschaffenheiten der Reliefs in der Nähe ausgewählt wird, damit der Strahl in der Nähe der Station (11) vorbeiläuft.

17. Verfahren gemäß einem der Ansprüche 1 bis 16, wobei, nachdem die Ausbreitungsbedingungen in einer Mikrozelle in Kontakt mit einer Zelle auf diese Weise berechnet wurden, das System Ausbreitungsbedingungen in der Zelle berechnet und anschließend eine Berechnung zur Glättung der Ergebnisse der beiden Berechnungen in Bezug auf einen Grenzbereich zwischen Zelle und Mikrozelle durchführt.

21

42

41

11

34

31

33

32

30

**F I G U R E   1**

F I G U R E   2

60    66    62    65    61

63

34

67    64    68

**F I G U R E    3**

F I G U R E   4

Hbs

hb

H

D          d          km

F I G U R E    5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9744977 A